# DEMANDE DE BREVET EUROPEEN

(11) **EP 0 525 845 A1**
(43) Date de publication de la demande: **03.02.1993**
(21) Numéro de dépôt: 92201825.4
(22) Date de dépôt: 22.06.1992
(51) Int. Cl.: H04L 12/56

(54) **Système de multiplexage pour sous-canaux à divers degrés de priorité**

(30) Priorité: 28.06.1991 FR 9108063
(71) Demandeur: PHILIPS COMMUNICATION D'ENTREPRISE, 75013 Paris (FR); Philips Electronics N.V., 5621 BA Eindhoven (NL)
(72) Inventeur: de la Bourdonnaye, Philippe, F-75008 Paris (FR)
(74) Mandataire: Chaffraix, Jean

(57) **Abrégé**

Ce système de multiplexage utilise une première voie de transmission principale (MC) pour transmettre ou non, avec une certaine bande passante liée au débit, les informations provenant des sous-canaux (SC1, ..., SCp) selon leur degré de priorité. Un degré dit d'autorisation de débordement est affecté à certains sous-canaux (SCk + 1, ..., SCp) tandis qu'il est prévu une deuxième voie de transmission principale dite voie de débordement (OC) pour transmettre les informations des sous-canaux à autorisation de débordement lorsque la première voie (MC) est saturée. Application : transmission de données.

## Description

La présente invention concerne un système de multiplexage pour des sous-canaux à divers degrés de priorité, système de multiplexage utilisant une première voie de transmission principale pour transmettre ou non, avec une certaine bande passante liée au débit, les informations provenant desdits sous-canaux selon leur degré de priorité.

Ce genre de système trouve des applications dans les transmissions de données utilisant une voie de transmission principale du genre défini par la recommandation X28 du CCITT.

Pour exploiter au mieux cette liaison, on attribue des degrés de priorité aux sous-canaux à multiplexer de sorte qu'un canal de grande priorité peut s'imposer sur la voie de transmission principale en interrompant le trafic des sous-canaux de priorié moindre. On pourra à ce sujet se reporter à la publication "TP-119002" (INTERNATIONAL TECHNOLOGY DISCLOSURE du gouvernement américain) du 25 Novembre 1990.

Un problème qui se pose avec ce genre de système est la demande d'accessibilité à la transmission pour un sous-canal ayant un degré de priorité comparable à ceux qui occupent déjà en totalité la voie de transmission principale.

Pour résoudre notamment ce problème, la présente invention propose un système du genre mentionné dans le préambule qui est remarquable en ce qu'un degré dit d'autorisation de débordement est affecté à certains sous-canaux tandis qu'il est prévu une deuxième voie de transmission principale dite voie de débordement pour transmettre les informations des sous-canaux à autorisation de débordement lorsque la première voie est saturée.

La description suivante accompagnée des dessins ci-annexés, le tout donné à titre d'exemple non limitatif, fera bien comprendre comment l'invention peut être réalisée.
La figure 1 représente un schéma du système conforme à l'invention.
La figure 2 est un organigramme d'explication du fonctionnement du système représenté à la figure 1.

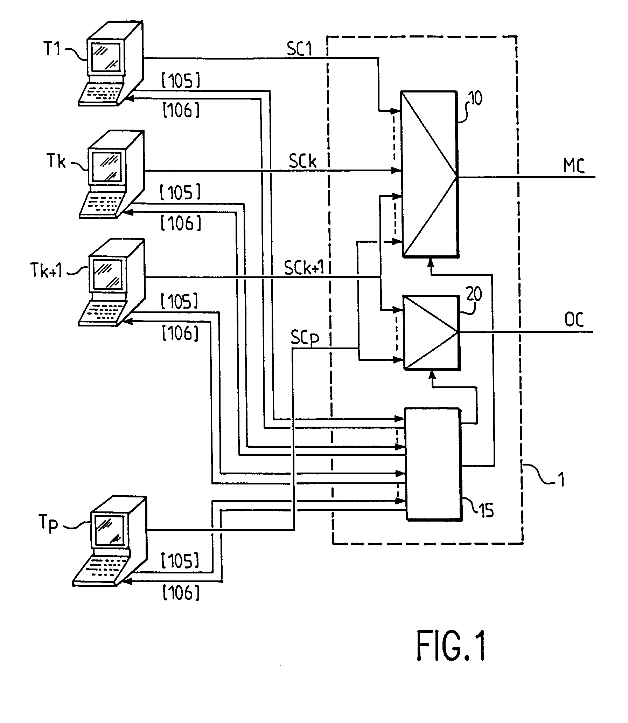

Le système 1 montré à la figure 1 permet de connecter une pluralité de terminaux T1, T2, ..., Tp à une voie de transmission principale MC. Les liaisons entre lesdits terminaux et le système 1 s'effectuent au moyen de sous-canaux SC1, SC2, ..., SCp. A ces sous-canaux sont affectés des degrés de priorités divers ; ainsi, des sous-canaux ont les degrés de priorité les plus bas et sont quilifiés de sous-canaux normaux, et d'autres auront des degrés de priorité plus élevés. Un organe de multiplexage 10 permet l'accès de ces sous-canaux à un canal de transmission principil MC sous la commande d'un organe de gestion 15. Ces différents sous-canaux SC1, ..., SCp peuvent transmettre des informations selon des débits divers et donc nécessiter des bandes passantes plus ou moins grandes ; le multiplex sur la voie MC doit être arrangé de façon à transmettre ces informations à débits divers. On pourra consulter à ce sujet la demande de brevet français n° 90 15 961 déposée le 14 décembre 1990 au nom de la demanderesse.

Puisque en principe la bande de transmission présentée par le canal MC est inférieure à la somme des bandes passantes des différents sous-canaux, il convient de réglementer l'accès de ces sous-canaux à la voie MC. Par exemple il est possible d'accorder l'accès à un sous-canal prioritaire en coupant l'accès aux canaux normaux, leur nombre étant fonction de la bande passante exigée par le sous-canal prioritaire.

Conformément à l'invention, il a été attribué un degré de priorité supplémentaire qui est une autorisation d'utiliser un canal de débordement OC. Ainsi les sous-canaux SCk+1, ..., SCp peuvent être connectés à ce canal OC au moyen d'un second organe de multiplexage 20 commandé, lui aussi, par l'organe de gestion 15.

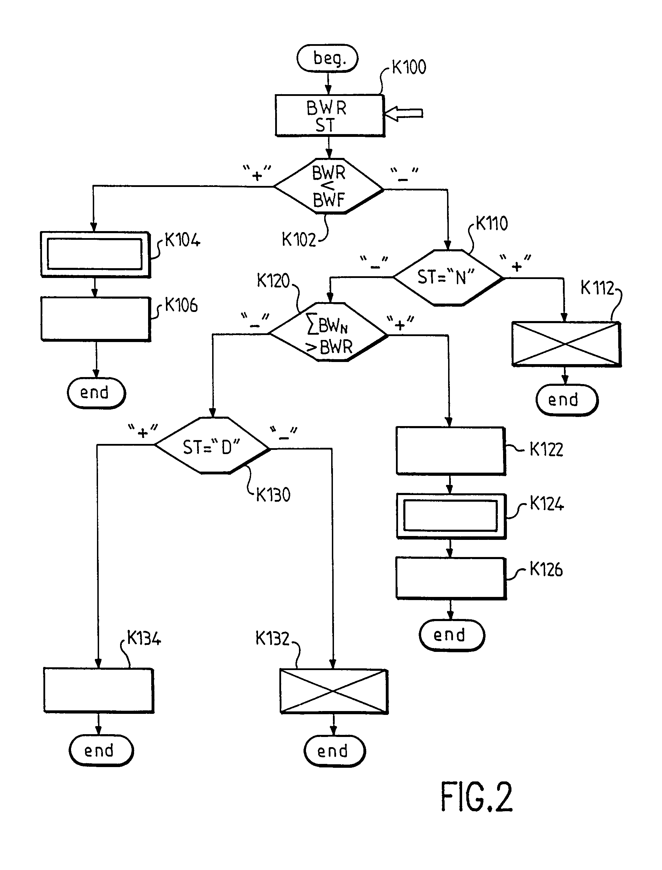

L'organigramme montré à la figure 2 explique en détail le fonctionnement de cet organe 15. Un moyen de dialogue entre cet organe et les terminaux est l'ensemble des circuits [105] et [106]. La demande d'accès passe par le circuit [105] et l'autorisation par le circuit [106]. La signification de ces circuits est donnée dans l'avis V24 du CCITT.

La case K100 indique la demande d'accès d'un sous-canal, le terminal envoie un signal sur le circuit [105], demande une certaine bande passante BWR et donne son degré de priorité ST :
- ST peut être égal à "N" pour signifier que l'on a affaire à un sous-canal normal et donc affecté de la priorité la plus basse,
- ST peut être égal à "D" et donc bénéficier du canal de débordement si besoin est et a donc le degré de priorité le plus élevé,
- ST peut n'être égal ni à "D" ni à "N" ; dans ce cas c'est un sous-canal prioritaire sur les canaux normaux mais sans droit d'accès sur le canal de débordement.

A la case K102 on teste si la bande passante BWR est inférieure à la bande passante disponible BWF ; si oui, on prend la branche " + " pour aller à la case K104 où l'on provoque un réarrangement du multiplex transmis par la voie MC, conformément au processus décrit dans la demande de brevet précitée. Puis, la case K106 indique l'opération selon laquelle l'accès est finalement autorisé et un signal est envoyé sur le circuit [106].

Si le test indiqué à la case K102 est négatif, on va à la case K110 où l'on examine le degré de priorité du sous-canal demandeur. Si on a affaire à un sous-canal normal (ST = "N") le sous-canal n'est pas admis à se connecter sur le canal principal MC, ceci étant indiqué à la case K112. Il n'y a pas d'émission sur le circuit [106].

Si le test à la case K110 est négatif on a affaire alors à un canal prioritaire. On examine ensuite (case K120) la bande passante totale occupée par les sous-canaux normaux ; si celle-ci est supérieure à celle requise par le sous-canal demandeur, on entreprend un processus de coupure des sous-canaux normaux case K122. Ce processus peut consister à couper les sous-canaux en tenant simplement compte de leur code d'identification. Par exemple, si ce code est un code alphabétique, la coupure sera effectuée en suivant l'ordre alphabétique pour n'obtenir que la bande passante requise. La case K124 indique le réarrangement du multiplex et la case K126 l'autorisation d'accès tout comme les cases K104 et K106 précitées.

Si le test indiqué à la case K120 est négatif on va à la case K130 où l'on examine si l'on a affaire à un sous-canal pour lequel un débordement est permis ou non. Si non, ce sous-canal n'est autorisé ni à se connecter à la voie MC, ni à emprunter la voie de débordement (case K132). Si l'on a affaire à un canal prioritaire ayant l'autorisation d'emprunter la voie de débordement, alors cette connexion est autorisée par le processus indiqué à la case K134.

## Revendications

1. Système de multiplexage pour des sous-canaux à divers degrés de priorité, système de multiplexage utilisant une première voie de transmission principale pour transmettre ou non, avec une certaine bande passante liée au débit, les informations provenant desdits sosu- canaux selon leur degré de priorité, caractérisé en ce qu'un degré dit d'autorisation de débordement est affecté à certains sous-canaux tandis qu'il est prévu une deuxième voie de transmission principale dite voie de débordement pour transmettre les informations des sous-canaux à autorisation de débordement lorsque la première voie est saturée.

2. Système de multiplexage selon la revendication 1, caractérisé en ce que pour autoriser un sous-canal prioritaire à se connecter sur la voie de transmission principale, différents sous-canaux de priorité moindre peuvent être déconnectés de ladite voie selon un ordre défini par leur code d'identification.
